# EUROPEAN PATENT APPLICATION

(11) **EP 3 432 250 A1**
(43) Date of publication of application: **23.01.2019**
(21) Application number: 17766557.7
(22) Date of filing: 10.03.2017
(51) Int. Cl.: G06Q 50/10

(54) **RIDE-SHARE SUPPORT SYSTEM, RIDE-SHARE SUPPORT METHOD, AND RIDE-SHARE SUPPORT APPARATUS**

(30) Priority: 18.03.2016 JP 2016055271
(71) Applicant: Morioka Sangyo Co., Ltd., Nakagami-gun, Okinawa 904-0301 (JP)
(72) Inventor: MORIOKA, Wataru, Nakagami-gun Okinawa 904-0301 (JP)
(74) Representative: Hoffmann Eitle
(86) International application number: PCT/JP2017/009684
(87) International publication number: WO 2017/159557

(57) **Abstract**

A highly satisfactory ridesharing support system capable of causing users who share a ride to be conscious of keeping manners and providing a comfortable moving space to the users.

A ridesharing support system for providing a rideshareable vehicle to a user, the ridesharing support system including a user terminal and a vehicle terminal capable of communication connection with the user terminal, the user terminal including a desired condition inputter that inputs a desired condition including a departure place and/or a destination place, a desired condition transmitter, and a vehicle information receiver that receives vehicle information regarding a dispatchable vehicle, the vehicle terminal including a desired condition receiver, and the ridesharing support system including a vehicle extractor that extracts the dispatchable vehicle on the basis of a current position of the vehicle and the desired condition, a vehicle information transmitter that transmits the vehicle information regarding the dispatchable vehicle, an evaluation accepter that accepts evaluation about another user who has performed ridesharing, and an evaluation information storage that stores accepted evaluation information.

## Description

### Technical Field

The present invention relates to a ridesharing support system, a ridesharing support system, a ridesharing support method, and a ridesharing support device that provide a rideshareable vehicle to users who desire to share a vehicle.

### Background Art

Generally, what are widely used as means of transportation in daily life are transportation systems such as trains and buses. The trains and buses provide mass transportation and thus are cheap. However, on the other hand, the trains and buses cannot turn in a small radius and are not flexible, especially in local cities, the trains and buses are not the means of transportation giving the users satisfaction due to the small numbers of routes and operations.

There are taxis and hires as means that can turn in a small radius and is flexible, and is capable of offering "door to door" services to the users. However, the taxis and the like are more expensive than the trains and the like, and thus it is difficult to use on a daily basis.

By the way, as a method of reducing payment fee per user in a taxi or the like, conventionally, people whose destinations are the same are gathered from those waiting for a taxi at a taxi stand, the people whose destinations are the same share one taxi and the like. However, such passenger-led ridesharing has a problem that it is established only when people whose destination places are the same are in the same place, and even if people wish ridesharing, it is not always reliably established.

To solve such a problem, systems to provide a rideshareable taxi or the like to users who wish to share a ride have been proposed. For example, Patent Literature 1 discloses a ridesharing support system that searches for a ridesharing partner who satisfies desired conditions of a user, displays a search result on a terminal possessed by the user, and causes the user to conduct evaluation for attributes (for example, sex and age) of the ridesharing partner after the ridesharing. Patent Literature 1 further discloses that, when there is no ridesharing partner who satisfies the user's desired conditions, the number of items of the user's desired conditions is reduced, the ridesharing partner is searched again, a priority condition of the user is set according to evaluation for the sex and age of the ridesharing partners who have shared a ride with the user in the past, and a search result is displayed on the user's terminal such that the ridesharing partners who satisfy the priority condition come to a higher rank.

### Citation List

### Patent Literature

Patent Literature 1: JP 2015-35044 A

### Summary of Invention

### Technical Problem

In the case where ridesharing is performed using the ridesharing support system as described in Patent Literature 1, strangers share a narrow space, and thus the user's satisfaction level varies depending on what kind of person the ridesharing partner is. Therefore, in Patent Literature 1, the desired condition that the user puts a high value on is set as the priority condition according to the evaluation for the sex and age of the ridesharing partners who have shared a ride with the user in the past, and the ridesharing partners who satisfy the priority condition are displayed on the user's terminal to come to a higher rank, whereby the user's satisfaction level is improved.

However, even if the ridesharing partner is a person who satisfies the sex and age desired by the user, the user's satisfaction level is remarkably decreased if the ridesharing partner has bad manners. Since bad manners of the ridesharing partner turns into troubles between the passengers in some cases, and the ridesharing partner having a certain level of manners is important for the user who wishes ridesharing. However, the ridesharing support system disclosed in Patent Literature 1 does not respond to such a request of the user.

The present invention has been made to solve the above-described problems. That is, an object of the present invention is to provide a ridesharing support system with high user's satisfaction level, capable of causing users who share a ride to be conscious of keeping manners and providing a comfortable moving space to each user.

### Solution to Problem

The gists of the present invention are as follows.
[1] A ridesharing support system for providing a rideshareable vehicle to a user, the ridesharing support system including a user terminal owned by a user, and a vehicle terminal installed on a vehicle side and capable of communication connection with the user terminal, the user terminal including: a desired condition inputter that inputs a desired condition including a departure place and/or a destination place desired by the user; a desired condition transmitter that transmits the input desired condition; and a vehicle information receiver that receives vehicle information regarding a dispatchable vehicle, the vehicle terminal including: a desired condition receiver that receives the desired condition including a departure place and/or a destination place desired by the user, and the ridesharing support system including: a vehicle extractor that extracts the dispatchable vehicle to the user on the basis of a current position of the vehicle and the desired condition; a vehicle information transmitter that transmits the vehicle information regarding the extracted dispatchable vehicle; an evaluation accepter that accepts evaluation about another user who has shared the same vehicle from the user; and an evaluation information storage that stores evaluation information regarding the accepted evaluation of the another user.
[2] The ridesharing support system according to [1] above, the user terminal further including: a user information receiver that receives the evaluation information regarding the evaluation of the another user who is a ridesharing candidate; and a vehicle dispatch request transmitter that transmits a vehicle dispatch request of the dispatchable vehicle in the dispatchable vehicle received by the vehicle information receiver, and the vehicle terminal further including: a vehicle dispatch request receiver that receives the vehicle dispatch request.
[3] The ridesharing support system according to [1] or [2] above, further including: a seat position storage that stores a seat position of the user who has got in the vehicle, and identification information capable of uniquely identifying the user in association with each other, in which the evaluation accepter accepts the evaluation from the user after selecting the seat position of the another user who has shared a ride, the seat position being displayed on a display screen of the user terminal or the vehicle terminal, and the evaluation information storage stores the accepted evaluation information as the evaluation of the another user having the identification information corresponding to the selected seat position.
[4] The ridesharing support system according to any one of [1[] to [3] above, further including: a seat position specifier that specifies a seat position of the user according to a get-in order or a get-off order of the user, in which the evaluation accepter accepts the evaluation about the another user who has shared a ride from the user by displaying the specified seat position on a display screen of the user terminal or the vehicle terminal.
[5] The ridesharing support system according to any one of [1] to [4] above, further including: a privilege provider that provides a predetermined privilege to the user on the basis of the evaluation information of the user.
[6] The ridesharing support system according to any one of [1] to [5], in which the vehicle extractor extracts the dispatchable vehicle to the user on the basis of a current position of the vehicle, and comparison between a departure place of the user and a departure place of the another user who is a ridesharing candidate, comparison between a destination place of the user and a destination place of the another user, or comparison between a route from the departure place to the destination place of the user and a route from the departure place to the destination place of the another user.
[7] The ridesharing support system according to [6] above, in which the vehicle extractor is performed on the basis of comparison between the evaluation information about the user and the evaluation information about the another user who is a ridesharing candidate.
[8] A ridesharing support method for providing a rideshareable vehicle to a user in a ridesharing support system including a user terminal owned by a user, and a vehicle terminal installed on a vehicle side and capable of communication connection with the user terminal, the ridesharing support method including: in the user terminal, a step of inputting a desired condition including a departure place and/or a destination place desired by the user; a step of transmitting the input desired condition; and a step of receiving vehicle information regarding a dispatchable vehicle; in the vehicle terminal, a step of receiving the desired condition including a departure place and/or a destination place desired by the user; and a step of extracting the dispatchable vehicle to the user on the basis of a current position of the vehicle and the desired condition; a step of transmitting the vehicle information regarding the extracted dispatchable vehicle; a step of accepting evaluation about another user who has shared the same vehicle from the user; and a step of storing evaluation information regarding the accepted evaluation of the another user.
[9] A ridesharing support device capable of communication connection with a user terminal owned by a user and a vehicle terminal installed on a vehicle side, and for providing a rideshareable vehicle to the user, the ridesharing support device including: a desired condition receiver that receives a desired condition including a departure place and/or a destination place desired by the user from the user terminal; a vehicle extractor that extracts a dispatchable vehicle to the user on the basis of a current position of the vehicle and the desired condition; a vehicle information transmitter that transmits vehicle information regarding the extracted dispatchable vehicle to the user terminal; an evaluation accepter that accepts evaluation about another user who has shared the same vehicle from the user; and an evaluation information storage that stores evaluation information regarding the accepted evaluation of the another user.

### Advantageous Effects of Invention

The ridesharing support system of the present invention includes an evaluation accepter that accepts evaluation, from the user, about another user who has shared the same vehicle. That is, the ridesharing support system of the present invention causes the users to evaluate each other, and thus the users can be conscious of being evaluated by other users. As a result, the users become acutely aware of manners and refrain from acts contrary to manners. Therefore, according to the ridesharing support system of the present invention, a comfortable moving space can be provided to the users and the users satisfaction level can be improved.

### Brief Description of Drawings

Fig. 1 is a diagram illustrating a configuration of a ridesharing support system corresponding to at least one embodiment of the invention.
Fig. 2 is a block diagram illustrating a configuration of a user terminal corresponding to at least one embodiment of the invention.
Fig. 3 is a block diagram illustrating a configuration of a server apparatus corresponding to at least one embodiment of the invention.
Fig. 4 is a block diagram illustrating a configuration of a vehicle terminal corresponding to at least one embodiment of the invention.
Fig. 5 is a diagram illustrating an example of a flowchart of get-in processing corresponding to at least one embodiment of the invention.
Fig. 6 is a diagram illustrating an example of vehicle dispatch to users corresponding to at least one embodiment of the invention.
Fig. 7 is a diagram illustrating an example of a flowchart of get-off processing corresponding to at least one embodiment of the invention.
Fig. 8 is a diagram illustrating an example of a display screen of a terminal device corresponding to at least one embodiment of the invention.

### Description of Embodiments

Hereinafter, embodiments of the present invention will be described with reference to the accompanying drawings. Hereinafter, description regarding the effect is one aspect of the effect of the embodiment of the present invention, and the effect is not limited to those described here. Further, the order of processes constituting the flowchart described below is in no particular order insofar as there is no inconsistency or unconformity in processing content.

### (Ridesharing Support System)

The present invention relates to a ridesharing support system that provides a rideshareable vehicle to a user who desires to share a vehicle. In the present specification, a vehicle refers to transportation means that allows a user to get therein and carries the user to a destination place, such as a taxi, a hire, a bus, or a private car.

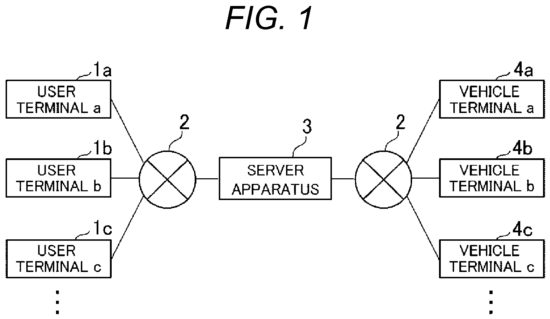

Fig. 1 is a diagram illustrating a configuration of a ridesharing support system corresponding to at least one embodiment of the invention. As illustrated in Fig. 1, the ridesharing support system of the present invention is configured by a plurality of user terminals 1 (user terminals 1a, 1b, 1c, and the like), a communication network 2, a server apparatus 3, and a plurality of vehicle terminals 4 (vehicle terminals 4a, 4b, 4c, and the like).

The user terminal 1 is connected to the server apparatus 3 via the communication network 2. The vehicle terminal 4 is connected to the server apparatus 3 via the communication network 2. Note that, in the configuration illustrated in Fig. 1, the user terminal 1 and the vehicle terminal 4 are communication-connected via the communication network 2 and the server apparatus 3. However, the user terminal 1 and the vehicle terminal 4 may be communication-connected without via the server apparatus 3.

The user terminal 1 is a terminal used by a user to perform a dispatch request of a rideshareable vehicle. Examples of the user terminal 1 include a personal computer, a smartphone, a tablet terminal, a mobile phone, and a PDA. However, the user terminal 1 is not limited to the examples. The user terminal 1 may be any device as long as the device can be connected to the server apparatus 3 via the communication network 2.

As the communication network 2, for example, various known wired or wireless communication networks can be used, such as the Internet, a wired or wireless public telephone network, a wired or wireless LAN, and a dedicated line.

The server apparatus 3 is a management/operation server for sending and receiving information between the user terminal 1 and the vehicle terminal 4, and for storing and analyzing communication histories with the user terminal 1 and the vehicle terminal 4.

The vehicle terminal 4 is a terminal installed in a vehicle and which transmits and receives information to and from the server apparatus 3. Examples of the vehicle terminal 4 include a personal computer, a smartphone, a tablet terminal, a mobile phone, and a PDA. However, the vehicle terminal 4 is not limited to the examples. The vehicle terminal 4 may be any device as long as the device can be connected to the server apparatus 3 via the communication network 2.

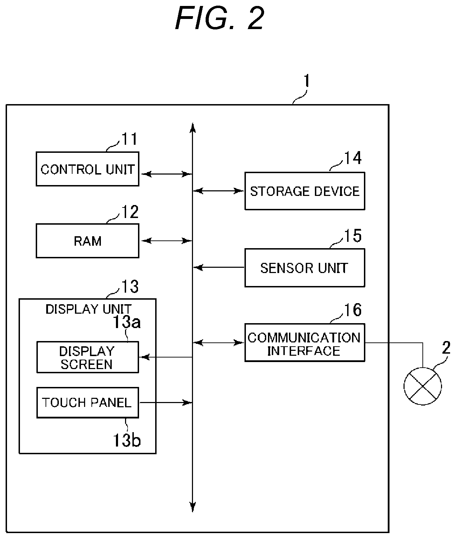

Fig. 2 is a block diagram illustrating a configuration of a user terminal corresponding to at least one embodiment of the invention. As illustrated in Fig. 2, the user terminal 1 includes a control unit 11, a RAM 12, a display unit 13, a storage device 14, a sensor unit 15, a communication interface 16, and the like, and can be connected to the communication network 2 via the communication interface 16.

The control unit 11 refers to programs and data stored in a storage device such as the storage device 14 and executes the programs. The RAM 12 is a work area of the control unit 11. An operation by the user on a touch panel 13b provided in the display unit 13 and information detected by the sensor unit are stored in the RAM 12 as input information, and the control unit 11 executes various types of arithmetic processing on the basis of the input information.

The display unit 13 has a display screen 13a for displaying information necessary for the user to input a desired condition, dispatchable vehicle information, and the like. In addition, the display unit 13 has the touch panel 13b that detects pressing by a finger, a stylus or the like, movement of a position of the finger or the like on the panel, and detects change in a coordinate position or the like. Note that the display screen 13a and the touch panel 13b may be integrally configured.

The storage device 14 is used as a storage area for storing programs and data, and can store data received from the server apparatus 3.

The sensor unit 15 includes a GPS sensor. Further, the sensor unit 15 may include various sensors, and examples of the various sensors include a fingerprint authentication sensor, a proximity sensor, an acceleration sensor, a gyro sensor, a magnetic force sensor, a luminance sensor, and an atmospheric pressure sensor, and the like.

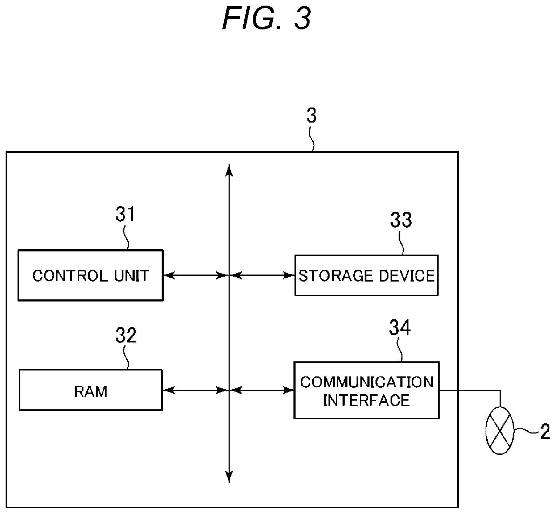

Fig. 3 is a block diagram illustrating a configuration of a server apparatus corresponding to at least one embodiment of the invention. As illustrated in Fig. 3, the server apparatus 3 includes a control unit 31, a RAM 32, a storage device 33, a communication interface 34, and the like, and can be connected to the communication network 2 via the communication interface 34.

The control unit 31 refers to programs and data stored in the storage device 33 and executes the programs. The RAM 32 is a work area of the control unit 31. Data input in the user terminal 1 and the vehicle terminal 4 and received via the communication interface 34, and the like are stored in the storage device 33.

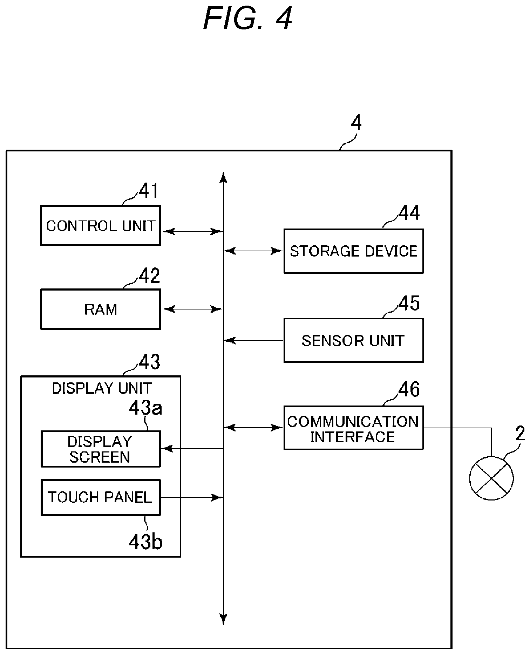

Fig. 4 is a block diagram illustrating a configuration of a vehicle terminal corresponding to at least one embodiment of the invention. As illustrated in the figure, the vehicle terminal 4 includes a control unit 41, a RAM 42, a display unit 43, a storage device 44, a sensor unit 45, a communication interface 46, and the like, and can be connected to the communication network 2 via the communication interface 46.

The control unit 41 refers to programs and data stored in a storage device such as the storage device 44 and executes the programs. The RAM 42 is a work area of the control unit 41. An operation by the user on a touch panel 43b provided in the display unit 43 and information detected by the sensor unit 45 are stored in the RAM 42 as input information, and the control unit 41 executes various types of arithmetic processing on the basis of the input information.

The display unit 43 has a display screen 43a for displaying information regarding a departure place and/or a destination place of the user, a map of an area around the vehicle, and the like. In addition, the display unit 43 has the touch panel 43b that detects pressing by a finger, a stylus or the like, movement of a position of the finger or the like on the panel, and detects change in a coordinate position or the like. Note that the display screen 43a and the touch panel 43b may be integrally configured.

The storage device 44 is used as a storage area for storing programs and data, and can store data received from the server apparatus 3.

The sensor unit 45 includes a GPS sensor. Further, the sensor unit 15 may include various sensors, and examples of the various sensors include a fingerprint authentication sensor, a proximity sensor, an acceleration sensor, a gyro sensor, a magnetic force sensor, a luminance sensor, and an atmospheric pressure sensor, and the like.

Next, functions of the user terminal 1 will be described. The user terminal 1 has a desired condition input function, a desired condition transmission function, a vehicle information reception function, a ridesharing candidate information reception function, a vehicle dispatch request acceptance function, a vehicle dispatch request transmission function, a user position information transmission function, a seat position instruction information receiver, an evaluation acceptance function, and an evaluation information transmission function.

The desired condition input function has a function to display a screen for inputting a departure place and/or a destination place of the user on the display screen 13a and receive an input of a desired condition such as the departure place and/or the destination place of the user when the user performs a dispatch request of a rideshareable vehicle.

The input of the departure place and/or the destination place of the user may be performed by displaying a map of an area around a current position of the user on the display screen 13a, and performing an operation to tap a point on the map, the point corresponding to the departure place or the like of the user. Alternatively, the input may be performed by displaying a keyboard or the like on the display screen 13a, and inputting characters of an address, a facility name, a telephone number, and the like of the departure place or the like of the user by a keyboard operation, or may be performed by a voice input. Note that the input of the departure place of the user may be omitted by setting the current position of the user, which is detected by the GPS sensor provided in the user terminal, as the departure place.

Examples of the desired condition other than the departure place and/or the destination place of the user include specification of a dedicated vehicle (for example, a women exclusive vehicle, a pregnant women exclusive vehicle, an elderly exclusive vehicle, or a children exclusive vehicle), specification of departure or arrival time, specification of the number of passengers, specification of a waypoint, specification of a vehicle type, specification of a seat position, specification of a driver, and specification of a partner who shares a ride (for example, age of the partner or average evaluation of the partner).

The desired condition transmission function has a function to transmit the desired condition of the user input by the desired condition input function to the server apparatus 3 by the communication interface 16.

The vehicle information reception function has a function to receive information of the dispatchable vehicle to the user from the server apparatus 3 via the communication interface 16. Examples of the information of the vehicle received by the vehicle information reception function include a current position of the vehicle, a scheduled pickup time, a destination place scheduled arrival time, the number of expected passengers who shares a ride, and a vehicle number of the vehicle.

The ridesharing candidate information reception function has a function to receive evaluation information regarding evaluation of another user who will be a ridesharing candidate in the dispatchable vehicle to the user from the server apparatus 3 via the communication interface 16.

The vehicle dispatch request acceptance function has a function to display the dispatchable vehicle information, which has been received by the vehicle information reception function, on the display screen 13a, cause the user to select the vehicle, and accept the vehicle dispatch request of the user. The acceptance of the vehicle dispatch request is performed, for example, by displaying a list of the dispatchable vehicles or the like on the display screen 13a, and causing the user to select a vehicle by an operation to tap the screen, or the like. Note that, in a case where the desired condition of the user is only the departure place and/or the destination place, or a case in which a vehicle that perfectly matches the desired condition of the user can be extracted even if the desired condition is other than the departure place and/or the destination place, transmission of the desired condition from the user terminal 1 to the server apparatus 3 is regarded as the vehicle dispatch request from the user, whereby a configuration without the vehicle dispatch request acceptance function and functions related to the vehicle dispatch request acceptance function may be adopted.

The vehicle dispatch request transmission function has a function to transmit the vehicle dispatch request of the user accepted by the vehicle dispatch request acceptance function to the server apparatus 3 via the communication interface 16.

The user position information transmission function has a function to transmit current position information of the user detected by the GPS sensor provided in the sensor unit 15 to the server apparatus 3 via the communication interface 16.

The seat position instruction information receiver has a function to receive instruction information regarding a seat position where the user is to be seated from the server apparatus 3 via the communication interface 16.

The evaluation acceptance function has a function to accept evaluation, from the user, about another user who has shared the same vehicle. The acceptance of evaluation is performed by displaying a seat position of another user who has shared a ride on the display screen 13a after the user has got off the vehicle, causing the user to select the seat position of another user who has shared a ride, and causing the user to input the evaluation of the another user corresponding to the seat position. The evaluation is performed by, for example, selecting the number of star marks by a tap operation, inputting a score, or the like. Alternatively, a comment entry column is displayed on the display screen 13a, and a specific comment about another user who has shared a ride may be accepted. Note that the evaluation acceptance function may be provided in a terminal device other than the vehicle terminal 4, the terminal device being installed on each seat of the vehicle, instead of being provided in the user terminal 1. In the case of such a configuration, the evaluation is accepted while the user is in the vehicle.

The evaluation information transmission function has a function to transmit the evaluation information about another user accepted by the evaluation acceptance function to the server apparatus 3 via the communication interface 16.

Next, functions of the server apparatus 3 will be described. The server apparatus 3 has a desired condition reception function, a user position information reception function, a vehicle position information reception function, a dispatchable vehicle extraction function, an optimum route search function, a vehicle information transmission function, a ridesharing candidate information transmission function, a vehicle dispatch request reception function, a vehicle status information storage function, a vehicle dispatch request transmission function, a route instruction information transmission function, a seat position specification function, a seat position storage function, a seat position instruction information transmitter, a vehicle status information reception function, an evaluation information reception function, an evaluation information storage function, and a privilege provision function.

The desired condition reception function has a function to receive information regarding the desired condition of the user from the user terminal 1 via the communication interface 34. The user position information reception function has a function to receive information regarding the current position of the user from the user terminal 1 via the communication interface 34. The vehicle position information reception function has a function to receive information regarding the current position of the vehicle from the vehicle terminal 4 via the communication interface 34.

The dispatchable vehicle extraction function has a function to extract the dispatchable vehicle on the basis of the desired condition of the user and the current position of the vehicle, and extracts the dispatchable vehicle to the user on the basis of the current position of the vehicle, and comparison between a departure place of the user and a departure place of another user who is a ridesharing candidate, comparison between a destination place of the user and a destination place of the another user, or comparison between a route from the departure place to the destination place of the user and a route from the departure place to the destination place of the another user. Further, the dispatchable vehicle extraction function favorably has a function to extract the dispatchable vehicle on the basis of comparison between evaluation information about the user and the evaluation information about another user who is a ridesharing candidate.

The optimum route search function has a function to search for an optimum route according to the departure place and the destination place of the user, the departure place and the departure place of another user who will share a ride, the current position of the vehicle, and the like, in a case where the user has requested dispatch of the extracted dispatchable vehicle. Further, the optimum route search function may have a function to calculate the scheduled pickup time and the destination place arrival time of the user in a case where the obtained optimum route is selected. The search for the optimum route is performed on the basis of viewpoints of a traveling distance and a traveling time of the vehicle, the destination place scheduled arrival time of a passenger and an expected passenger, and the like.

The vehicle information transmission function has a function to transmit the information of the dispatchable vehicle to the user, which has been extracted by the dispatchable vehicle extraction function, to the user terminal 1 via the communication interface 34. The vehicle information transmission function may have a function to transmit the scheduled pickup time of the user and the like, which have been calculated by the optimum route search function, to the user terminal 1 via the communication interface 34.

The ridesharing candidate information transmission function has a function to transmit the evaluation information regarding the evaluation of another user who will be a ridesharing candidate in the dispatchable vehicle to the user to the user terminal 1 via the communication interface 34.

The vehicle dispatch request reception function has a function to receive the vehicle dispatch request of the user from the user terminal 1 via the communication interface 34. The vehicle status information storage function has a function to change status information of the vehicle after the vehicle dispatch request reception function accepts the vehicle dispatch request of the user, and store the status information of the vehicle. The examples of the status information of the vehicle to be stored include the number of expected passengers of the vehicle and a planned traveling route of the vehicle.

The vehicle dispatch request transmission function has a function to transmit a vehicle dispatch request based on the vehicle dispatch request of the user received by the vehicle dispatch request reception function to the vehicle terminal 4 via the communication interface 34. Further, the vehicle dispatch request transmission function has a function to transmit the desired condition of the user including at least the departure place and/or the destination place of the user to the vehicle terminal 4 via the communication interface 34.

The route instruction information transmission function has a function to transmit route instruction information based on the optimum route obtained by the optimum route search function to the vehicle terminal 4 via the communication interface 34. The route instruction information to be transmitted includes instruction information regarding a get-in order and a get-off order of the user, and the like.

The seat position specification function has a function to specify the seat position of the user according to the get-in order and the get-off order of the user. The seat position instruction information transmitter has a function to transmit the seat position of the user specified by the seat position specification function to the user terminal 1 via the communication interface 34. The seat position storage function has a function to store the seat position of the user who has got in the vehicle, and identification information capable of uniquely identifying the user in association with each other.

The vehicle status information reception function has a function to receive vehicle status information regarding the number of passengers actually boarding the vehicle from the vehicle terminal 4 via the communication interface 34. The received vehicle status is stored by the vehicle status information storage function described above.

The evaluation information reception function has a function to receive the evaluation information of another user who has shared a ride, which has been evaluated by the user, from the user terminal 1 via the communication interface 34. The evaluation information storage function has a function to store the evaluation information received by the evaluation information reception function. The evaluation information is stored as the evaluation of another user having identification information corresponding to the selected seat position.

The privilege provision function has a function to provide a predetermined privilege to the user on the basis of the evaluation information of the user stored in the evaluation information storage function. Examples of the predetermined privilege include a discount or a free offer of fare or optional service fee. Examples of an optional service include specification of various dedicated vehicles such as a women exclusive vehicle, and specification of a driver.

Next, functions of the vehicle terminal 4 will be described. The vehicle terminal 4 has a vehicle position information transmission function, a vehicle dispatch request reception function, a route instruction information reception function, a vehicle status information input function, and a vehicle status information transmission function.

The vehicle position information transmission function has a function to transmit current position information of the vehicle detected by the GPS sensor provided in the sensor unit 45 to the server apparatus 3 via the communication interface 46.

The vehicle dispatch request reception function has a function to receive, via the communication interface 46, the vehicle dispatch request transmitted from the server apparatus 3. Further, the vehicle dispatch request reception function has a function to receive the desired condition of the user including at least the departure place and/or the destination place of the user from the server apparatus 3 via the communication interface 34.

The route instruction information reception function has a function to receive, via the communication interface 46, the route instruction information transmitted from the server apparatus 3. The received route instruction information includes the instruction information regarding a get-in order and a get-off order of the user, and the like.

The vehicle status information input function has a function to input the vehicle status information regarding the number of passengers actually boarding the vehicle. The input of the vehicle status information is performed by, for example, displaying a get-in button, a get-off button, and the like on the display screen 43a of the vehicle terminal 4, and performing an operation to tap a corresponding button by a driver of the vehicle when the user has got in or got off the vehicle.

The vehicle status information transmission function has a function to transmit the vehicle status information regarding the number of passengers actually boarding the vehicle to the server apparatus 3 via the communication interface 46. Note that a function to determine get-in and get-off of the user from the current positions of the user and the vehicle, using the GPS function provided in the user terminal 1 and the vehicle terminal 4, may be provided in the server apparatus 3 without having the vehicle status information input function and the vehicle status information transmission function.

Next, the premise of the embodiment of the present invention will be described. As an example of the embodiment of the present invention, an application installed on a smartphone can be mentioned, for example. When the application is activated in the user terminal 1, identification information or the like given to the user terminal 1 is acquired as information regarding activation, for example. Further, to identify the user, a configuration to communicate with the server apparatus 3 and log in using a user's account given in advance, or to transmit the identification information of the user terminal 1 acquired at the time of activation to the server apparatus 3 may be employed. The identification information of the user terminal 1 or the account of the user at log-in is unique data for identifying the user and is stored in the server apparatus as a user ID.

Personal information of the user is stored in the server apparatus 3 in association with the user ID. Examples of stored personal information items include "name", "sex", "date of birth", "address", "telephone number", "mail address", "password", "payment method", "credit card number", "evaluation information", and "usage history". The name and the like of the user are stored as information input by the user at the time of first use of the application. Note that the input of the items such as the name by the user may be automatically performed by capturing a license, a passport, a National Individual Number card, or the like as an image.

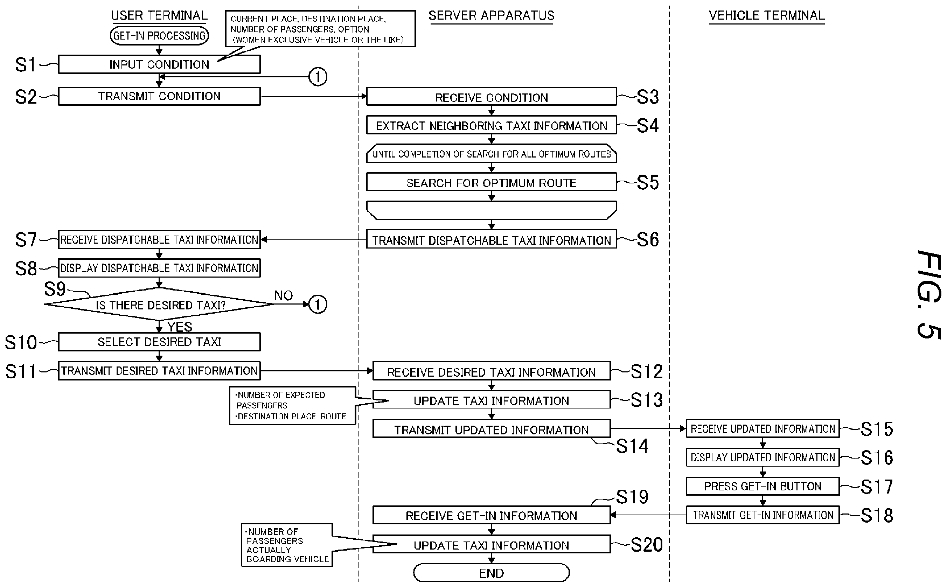

Next, the get-in processing in the ridesharing support system of the present invention will be described. Fig. 5 is a diagram illustrating an example of a flowchart of get-in processing corresponding to at least one embodiment of the invention.

In the get-in processing, first, a desired condition input screen for inputting the departure place and/or the destination place of the user is displayed on the display screen 13a, and the user inputs the desired condition according to displayed content (step S1). The input of the departure place and/or the destination place of the user is performed by displaying a map of an area around the current position of the user on the display screen 13a, and performing an operation to tap a point on the map, the point corresponding to the departure place and/or the destination place of the user. Note that the input of the departure place of the user may be omitted by setting the current position of the user, which is detected by the GPS sensor provided in the user terminal, as the departure place. Further, in a case where there is a route frequently used by the user, the departure place and the destination place in the route are input and registered in advance, so that the input of the departure place and the like at the time of actual use can be omitted. The desired conditions other than the departure place and/or the destination place, which can be input, have been described above. The input desired condition is transmitted to the server apparatus 3 (step S2).

The server apparatus 3 receives the desired condition (step S3). Next, a candidate of the dispatchable vehicle to the user is extracted on the basis of the current position of the vehicle, and comparison between the departure place of the user and the departure place of another user who is a ridesharing candidate, comparison between the destination place of the user and the destination place of the another user, or comparison between a route from the departure place to the destination place of the user and a route from the departure place to the destination place of the another user (step S4).

For example, in a case where there are users A and B at the same departure place or departure places close to each other near a vehicle a, the vehicle a is extracted as a dispatchable vehicle to the users A and B. Further, in a case where there are users C and D at different departure places, although the destination place is the same or the destination places are close to each other, near a vehicle b, the vehicle b is extracted as a dispatchable vehicle to the users C and D. Further, in a case where there are users E and F having different departure places and destination places, but the respective routes from the departure places to the destination places of the users E and F overlap or are close to each other, near a vehicle c, the vehicle c is extracted as the dispatchable vehicle to the users E and F.

In a case where the desired condition of the user includes the specification of various dedicated vehicles such as a women exclusive vehicle, the specification of a vehicle type, or the like, other than the departure place and/or the destination place, extraction of the dispatchable vehicle candidate is performed in consideration of such a desired condition.

Further, extraction of the dispatchable vehicle candidate is further performed on the basis of the comparison between the evaluation information about the user and the evaluation information about another user who is a ridesharing candidate. Extraction of a vehicle candidate based on the comparison of evaluation information refers to extracting a vehicle such that another user having the same evaluation information "4" can become the partner who shares a ride in a case where the evaluation information of the user is "4" in five-grade evaluation. When users having comparable evaluation information share a ride, the difference in manner level between the users who share a ride can be eliminated. As a result, the user's satisfaction level can be improved.

After extracting the dispatchable vehicle candidate, the server apparatus 3 searches for the optimum route when the user actually gets in the extracted vehicle candidate (step S5). The search for the optimum route is performed on the basis of viewpoints of a traveling distance and a traveling time of the vehicle, the destination place scheduled arrival time of a passenger and an expected passenger, and the like. In a case where the destination place scheduled arrival time of the passenger and the expected passenger is considerably delayed from an initial schedule even if a certain candidate vehicle travels along the obtained optimum route, the candidate vehicle is determined to be an undispatchable vehicle. For example, in a case where the destination places of the user A and the user B are in opposite directions and the distance between the destination places is significantly large even if the users A and B are at the same departure place or departure places close to each other near the vehicle a, the vehicle a is determined to be an undispatchable vehicle for either one of the user A and the user B.

The search for the optimum route is favorably conducted to search for a route in which the number of passengers and a driver actually boarding the vehicle does not exceed the number of people that is smaller by one person than the number of seats incl driver's of the vehicle, in addition to the above-described viewpoints. For example, in a case of a vehicle having the number of seats incl driver's of five, when the number of passengers boarding the vehicle at the same time becomes is four (the number of passengers including the driver is five) when a certain route is selected even if the destination place scheduled arrival times of the passengers and the expected passengers can be shortest by taking the route, another route is re-searched. As a result of the re-search, if there is a route in which the number of passengers boarding on the vehicle at the same time does not exceed three, and the destination place scheduled arrival times of the passengers and the expected passengers are not considerably delayed, the route can be favorably selected as the optimum route. When the number of passengers boarding the vehicle at the same time is four, the number of passengers sitting on the rear seats is three. As a result, in the rear seats, the space occupied by each passenger becomes small and the distance to a stranger who shares a ride becomes short, and thus stress and tension of the passengers are increase, leading to a decrease in the user's satisfaction level. The route in which the number of passengers and the driver boarding the vehicle at the same time does not exceed the number of people that is smaller by one person than the number of seats incl driver's of the vehicle (for example, in the vehicle having the number of seats incl driver's of five, the number of passengers does not exceed three) is searched, and the passengers are picked up and got off along the route, whereby the decrease in the user's satisfaction level can be avoided.

Information of the vehicle extracted as the dispatchable vehicle candidate in step S4 and not determined to be the undispatchable vehicle in step S5 is transmitted to the user terminal 1 as dispatchable vehicle information (step S6). The information of the vehicle to be transmitted includes the vehicle number, the scheduled pickup time, the destination place scheduled arrival time, the evaluation information of another user who is a ridesharing candidate, the seat position of the user, and the like. In a case where the user has input desired conditions other than the departure place and the destination place in step S1 and a vehicle that perfectly matches the user's desired conditions is not extracted in steps S4 and S5, information of a vehicle that satisfies at least one of the user's desired conditions is transmitted to the user terminal 1 as the dispatchable vehicle information.

The user terminal 1 receives the dispatchable vehicle information (step S7), and displays the received dispatchable vehicle information on the display screen 13a (step S8). The information of the vehicle to be displayed includes the scheduled pickup time, the destination place scheduled arrival time, the evaluation information of another user who is a ridesharing candidate, and the like. By displaying the evaluation information of another user who is a ridesharing candidate, ridesharing with a partner who is expected to have bad manners can be avoided, and anxiety for the ridesharing partner of the user can be eliminated.

In a case where there is a plurality of dispatchable vehicles, a list of the dispatchable vehicle information is displayed. The display order can be determined on the basis of various criteria such as the scheduled pickup time, the destination place scheduled arrival time, and the evaluation information of another user who is a ridesharing candidate. What display order based on which criterion is desirably changeable by selection of the user.

The user judges presence or absence of a vehicle desired to dispatch from the dispatchable vehicle information displayed on the display screen 13a (step S9). In a case where the displayed vehicle information includes a vehicle desired to dispatch, the user selects the vehicle desired to dispatch by tapping the display screen 13a or the like to request dispatch (step S10). The vehicle dispatch request of the user is transmitted to the server apparatus 3 (step S11). Note that, in a case where there is no vehicle desired to dispatch in the displayed list in step S9, the processing returns to the input of the desired condition (step S1), the desired condition is changed, and steps S2 to S9 described above are executed again.

The server apparatus 3 receives the vehicle dispatch request of the user (step S12), and updates the vehicle status information (step S13). The vehicle status information to be updated includes the number of expected passengers, expected passenger information (addition of information regarding the departure place and the destination place of the user who has requested vehicle dispatch), a planned traveling route, the get-in order and the get-off order of the passenger and the expected passenger, and the destination place scheduled arrival time, and the like.

Note that, in the ridesharing support system of the present invention, steps S9 to S12 can be omitted. Note that, in a case where the user's desired condition input in step S1 is only the departure place and/or the destination place, or a case in which a vehicle that perfectly matches the user's desired condition can be extracted even if the desired condition is other than the departure place and/or the destination place, transmission of the desired condition performed in step S2 is regarded as the vehicle dispatch request from the user, and the extracted vehicle can be automatically dispatched to the user without prompting the user to select the vehicle. In this case, the server apparatus 3 transmits the information of the vehicle to be dispatched to the user (step S6), and updates the status information of the automatically dispatched vehicle (step S13).

The vehicle status information updated in the server apparatus 3 is transmitted to the vehicle terminal 4 (step S14). The vehicle terminal 4 receives the updated vehicle status information (step S15). The received vehicle status information is displayed on the display screen 43a (step S16). The planned traveling route, and the departure place and the destination place, the get-in order, the get-off order, and the destination place scheduled arrival time of the passenger and/or the expected passenger, and the like are displayed on the display screen 43a. The driver of the vehicle travels on the basis of the displayed information and heads to pick up the user at the departure place.

When the user has got in the vehicle, the driver performs an operation to tap the get-in button displayed on the display screen 43a to input get-in information of the user (step S17). For example, the seat positions of users are displayed and an image corresponding to the seat position corresponding to a user to get off is tapped on the display screen 43a, whereby getting-in of the user who has sat on the seat can be input as the get-in information. The get-in information of the user is transmitted to the server apparatus 3 (step S18).

The server apparatus 3 receives the get-in information of the user (step S19), and updates the vehicle status information (step S20). The vehicle status information updated here is the number of passengers actually boarding the vehicle and the like.

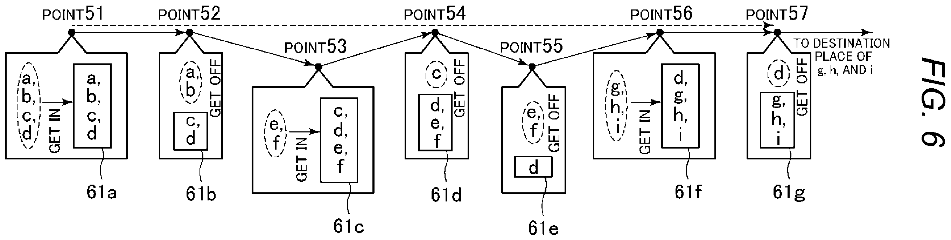

Fig. 6 is a diagram illustrating an example of vehicle dispatch to a user corresponding to at least one embodiment of the invention. Each of users a to d is a user having point 51 as the departure place. The destination place of the users a and b is point 52, the destination place of the user c is point 54, and the destination place of the user d is point 57. When the server apparatus determines that the scheduled arrival times at the respective destination places of the users a to d in the case where the users a to d share a ride are not considerably delayed as compared with a case where the users a to d do not share a ride, a vehicle located near the point 51 and having vacant seats for four passengers is extracted as the dispatchable vehicle to the users a to d, and information of the vehicle is transmitted to the user terminals of the users a to d. When the users a to d request dispatch of the vehicle, the vehicle heads to pick up the users at the point 51. A vehicle 61a that has picked up the users a to d at the point 51 moves toward the point 52 that is the destination place of the users a and b.

In a case where users e and f having point 53 as the departure place and point 55 as the destination place desire dispatch of a vehicle on the route to the point 52, the vehicle 61a is planned to travel on the route close to a route from the point 53 to the point 55, and two vacant seats to the point 53 are available. Therefore, the vehicle 61a is extracted as a dispatchable vehicle to the users e and f. When the users e and f requests dispatch of the vehicle 61a, a traveling route, which has been changed due to pickup of the users e and f, is transmitted from the server apparatus to the vehicle 61a.

When the vehicle 61a arrives at the point 52, the vehicle 61a make the users a and b to get off the vehicle. A vehicle 61b after the users a and b have got off the vehicle takes the users c and d and moves toward the point 53. The vehicle 61b arrives at the point 53, and a vehicle 61c that has picked up the users e and f heads to the point 54 that is the destination place of the user c. When the vehicle 61c arrives at the point 54, the vehicle 61c makes the user c to get off the vehicle. A vehicle 61d after the user c has got off the vehicle takes the users d to f and moves toward the point 55 that is the destination place of the users e and f.

In a case where users g to i having point 56 as the departure place desire dispatch of a vehicle on the route to the point 55, the vehicle 61d is planned to travel on the route close to a route from the point 56 to the destination place of the users g to i, and three vacant seats to the point 56 are available. Therefore, the vehicle 61d is extracted as a dispatchable vehicle to the users g to i. When the users g to i request dispatch of the vehicle 61d, a traveling route (point 55 → point 56 → point 57), which has been changed due to pickup of the users g to i, is transmitted from the server apparatus to the vehicle 61d.

However, in a case where the destination place scheduled arrival time of the user d is considerably delayed from the calculated destination place scheduled arrival time initially calculated when the user d has got in the vehicle if the vehicle heads to the point 56, the vehicle 61d is not extracted as the dispatchable vehicle to the users g to i or is instructed to head to the point 56 after moving to the point 57 and making the user d to get off the vehicle.

When the vehicle 61d arrives at the point 55, the vehicle 61d makes the users e and f to get off the vehicle. A vehicle 61e after the users e and f have got off the vehicle takes the user d and moves toward the point 56. A vehicle 61f that has arrived at the point 56 and picks up the users g to i heads to the point 57 that is the destination place of the user d. When the vehicle 61f arrives at the point 57, the vehicle 61f makes the user d to get off the vehicle. A vehicle 61g after the user d has got off the vehicle takes the users g to i and moves toward the destination place of the users g and i. Note that in Fig. 6, the arrow illustrated by the dotted line represents the planned traveling route in the case where only the users a to d are the passengers, and the arrows illustrated by the solid lines represent the actual traveling route.

Even in the case where a large number of users desires vehicle dispatch as described above, the server apparatus calculates the presence or absence of the vacant seats for the number of expected passengers of the vehicle, the time required for pickup, time required to the destination place of each user, and the like, and performs appropriate vehicle dispatch. By repeating such vehicle dispatch processing, the time required for pickup of each user can be minimized while creating a state of no vacant seat in the vehicle. Note that Fig. 6 is a diagram for describing the case where the number of seats incl driver's of the vehicle to be dispatched to the user is five. However, the vehicle to be dispatched to the user in the ridesharing support system of the present invention is not limited to five in the number of seats incl driver's, and a vehicle having the number of seats incl driver's that is less than five or exceeds five is also applicable.

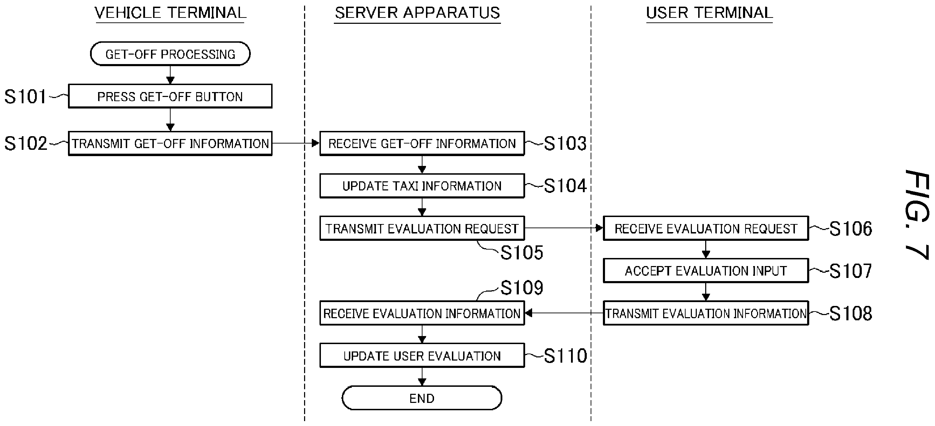

Next, get-off processing in the ridesharing support system of the present invention will be described. Fig. 7 is a diagram illustrating an example of a flowchart of get-off processing corresponding to at least one embodiment of the invention.

When the user has got off the vehicle, the driver performs an operation to tap the get-off button displayed on the display screen 43a to input get-off information of the user (step S101). For example, the seat positions of users are displayed and an image corresponding to the seat position corresponding to a user to get off is tapped on the display screen 43a, whereby getting-off of the user who has sat on the seat can be input as the get-off information. The input get-off information of the user is transmitted to the server apparatus 3 (step S102).

The server apparatus 3 receives the get-off information of the user (step S103) and updates the vehicle status information (step S104). The vehicle status information updated here is the number of passengers actually boarding the vehicle and the like.

Next, the server apparatus 3 transmits an evaluation request of another user who has shared a ride to the user terminal 1 (step S105). Note that, in the case where the user has got in the vehicle, the identification information of the user and the seat position are stored in association with each other, and thus the seat position of the user who has got off the vehicle is received by the server apparatus 3 as the get-off information in step S103, the user who has got off the vehicle can be identified. In step S105, the evaluation request about another user who has shared a ride is transmitted to the user terminal 1 of the user identified to "get off' according to the get-off information.

The user terminal 1 receives the evaluation request of another user who has shared a ride (step S106). When the evaluation request has been received in the user terminal 1, an image for inputting evaluation of the another user is displayed on the display screen 13a, and an evaluation input about the another user is accepted by an operation to the user terminal 1 (step S107).

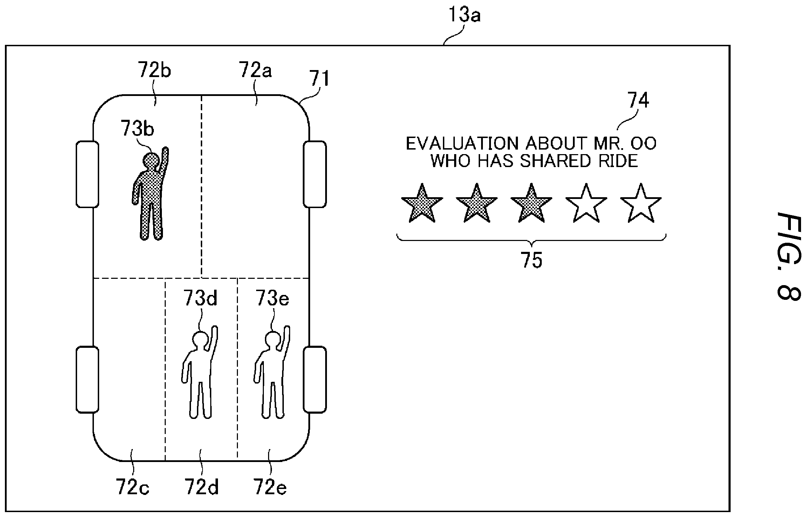

Fig. 8 is a diagram illustrating an example of a display screen of a terminal device corresponding to at least one embodiment of the invention. On the display screen 13a, an image of a taxi vehicle 71 is displayed. The upper side on the display screen 13a corresponds to the front of the vehicle 71, and the lower side on the display screen 13a corresponds to the rear of the vehicle 71. The vehicle 71 is divided into five regions by the dotted lines, and each region corresponds to a seat position 72. Human-like icons 73b, 73d, and 73e representing other users to be evaluated are displayed at seat positions 72b, 72d, and 72e. The user can input evaluation of another user corresponding to the seat position 72 by selecting one of the icons 73b, 73d, and 73e representing other users displayed on the display screen 13a. Note that, in Fig. 8, an icon 73 representing another user is not displayed on a seat position 72c. This is a place where the user who evaluates other users was sitting. Further, a seat position 72a on the front right side in the vehicle 71 corresponds to the driver's seat, and thus the human-like icon is not displayed. However, it may be configured to display a human-like icon and allow an input of evaluation about the driver. With the configuration, the evaluation about the driver can also be accumulated in the server apparatus, and the evaluation information about the driver can be provided to the user when the user selects a vehicle. Note that Fig. 8 is a diagram for describing the case where the number of seats incl driver's of the vehicle to be dispatched to the user is five. However, the vehicle to be dispatched to the user in the ridesharing support system of the present invention is not limited to five in the number of seats incl driver's, and a vehicle having the number of seats incl driver's that is less than five or exceeds five is also applicable.

When the user selects one of the icons 73 displayed at the seat positions 72 of other users, the selected icon is displayed in a different color from the other icons. By displaying the selected icon in a different color from the other icons in this manner, the user who is a current evaluation target has sat on which seat position 72 can be clarified. In Fig. 8, the icon 73b is displayed in a different color from the other icons 73, and it is known that another user who has sat on the seat position 72b as a passenger's seat is the current evaluation target.

Since the identification information of other users and the seat positions are stored in association with each other in the server apparatus 3, which user's evaluation, of other users who share a ride, is input can be identified by selecting the icon 73 displayed on the seat position 72 of another user.

The evaluation about another user is performed by inputting a score (for example, star marks) by the number of tap operations, inputting a score by a software keyboard, selecting a score from a pull-down list, or the like. In addition, it is also possible to enter not only the score but also comments about the another user by selection of the user. For example, when a comment entry button is displayed on the display screen 13a and the user taps the comment entry button, a comment entry column and a software keyboard are displayed. The user operates the software keyboard to input specific comments. By accepting specific comments, an adequate advice to improve manners can be given from a system administrator to the another user who has been evaluated.

Fig. 8 displays information 74 regarding the user name on an upper right side on the display screen 13a. Specifically, "Evaluation about Mr. A who has shared a ride" is displayed. In this case, the user name corresponding to the another user sitting on the seat position 72b as a passenger's seat is displayed. The user name registered in advance in the server apparatus 3 is displayed, and it may be not only a real name but also a handle name. Further, in the present embodiment, the identification information of the user and the seat position are stored in association with each other, and the icon 73 displayed at the seat position 72 of another user is selected on the display screen 13a and the evaluation is input. However, the evaluation can be performed without displaying the user name, the handle name, or the like. With such a configuration, occurrence of troubles among users can be prevented.

The evaluation about another user can be performed in five grades, for example, with the number of star marks 75. In Fig. 8, the star marks up to the third mark from the left end are displayed in a different color from the two star marks on the right side, and it is known that the third-grade evaluation out of the five-grade evaluation has been made.

Since another user to be evaluated is identified on the basis of the seat position 72 in step S107, the user can select the another user to be evaluated from among a plurality of other users who has shared a ride with higher accuracy than a case of identifying another user on the basis of the age, the sex, or the like of other users.

Further, the user may input evaluation about all the other users who have shared a ride or may input evaluation about only part of the other users in a case where the user shares a ride with a plurality of other users. In the case of inputting evaluation about a plurality of other users, evaluation about other users corresponding to the seat positions 72 can be input in order of selection of the seat positions 72.

The evaluation information input by the user terminal 1 is transmitted to the server apparatus 3 (step S108). The server apparatus 3 receives the evaluation information (step S109), and updates the evaluation information about the another user who has been evaluated on the basis of the received evaluation information (step S110).

By performing the evaluation among the passengers who share a ride in this manner, the passengers are conscious of being evaluated by one another, and thus the passengers can be motivated to keep manners without causing unpleasant feelings and troubles. The passengers can enjoy an inexpensive and convenient mobile service while sharing a comfortable moving space. Further, for taxi operators, there is an advantage that troubles between the passengers or between the passengers and the drivers can be suppressed by the improvement of the manners of the passengers, and a comfortable working environment can be provided to the drivers. Furthermore, even for operators who operate this ridesharing system, there is an advantage that the user's anxiety for the bad manners of other passengers in the ridesharing can be eliminated, and thus use of the ridesharing system can be promoted.

Further, by providing a predetermined privilege such as a discount or a free offer of fare or optional service fee according to the evaluation of the user, the manners of the users can be further improved.

Next, a method of calculating a fare in the present invention will be described. In the present invention, the fare is calculated on the basis of a direct distance between the user's departure place and destination place, or a (shortest) distance on the traveling route assuming that the user boards the vehicle alone. For example, in a case where the direct distance between the user's departure place and destination place, or the (shortest) distance on the traveling route assuming that the user boards the vehicle alone is 5 km, the user's fare corresponds to the distance of 5 km even if the traveling distance by the vehicle from when the user gets in the vehicle to when the user arrives at the destination place is 10 km. In the ridesharing support system of the present invention, the traveling distance while the user is boarding the vehicle varies depending on the departure place and the destination place of the partner who shares a ride. However, by adopting the fare calculation method as described above, the fare of the user can be made constant and the dissatisfaction or anxiety of the user for the fare payment can be eliminated.

In the above-described embodiment, the system including the user terminal, the server apparatus, and the vehicle terminal has been described. However, the present invention can also be embodied by a user terminal and a vehicle terminal. In the embodiment by the user terminal and the vehicle terminal, the functions performed by the server apparatus in the above embodiment are performed by the user terminal or the vehicle terminal.

### Reference Signs List

- 1: User terminal
- 11: Control unit
- 12: RAM
- 13: Display unit
- 14: Storage device
- 15: Sensor unit
- 16: Communication interface
- 2: Communication network
- 3: Management server apparatus
- 31: Control unit
- 32: RAM
- 33: Storage device
- 34: Communication interface
- 4: Vehicle terminal
- 41: Control unit
- 42: RAM
- 43: Display unit
- 44: Storage device
- 45: Sensor unit
- 46: Communication interface

## Claims

1. A ridesharing support system for providing a rideshareable vehicle to a user, the ridesharing support system including a user terminal owned by a user, and a vehicle terminal installed on a vehicle side and capable of communication connection with the user terminal,
the user terminal comprising:
a desired condition inputter that inputs a desired condition including a departure place and/or a destination place desired by the user;
a desired condition transmitter that transmits the input desired condition; and
a vehicle information receiver that receives vehicle information regarding a dispatchable vehicle,
the vehicle terminal comprising:
a desired condition receiver that receives the desired condition including a departure place and/or a destination place desired by the user, and
the ridesharing support system comprising:
a vehicle extractor that extracts the dispatchable vehicle to the user on the basis of a current position of the vehicle and the desired condition;
a vehicle information transmitter that transmits the vehicle information regarding the extracted dispatchable vehicle;
an evaluation accepter that accepts evaluation about another user who has shared the same vehicle from the user; and
an evaluation information storage that stores evaluation information regarding the accepted evaluation of the another user.

2. The ridesharing support system according to claim 1,
the user terminal further comprising:
a user information receiver that receives the evaluation information regarding the evaluation of the another user who is a ridesharing candidate in the dispatchable vehicle received by the vehicle information receiver; and
a vehicle dispatch request transmitter that transmits a vehicle dispatch request of the dispatchable vehicle, and
the vehicle terminal further comprising:
a vehicle dispatch request receiver that receives the vehicle dispatch request.

3. The ridesharing support system according to claim 1 or 2, further comprising:
a seat position storage that stores a seat position of the user who has got in the vehicle, and identification information capable of uniquely identifying the user in association with each other, wherein
the evaluation accepter accepts the evaluation from the user after selecting the seat position of the another user who has shared a ride, the seat position being displayed on a display screen of the user terminal or the vehicle terminal, and
the evaluation information storage stores the accepted evaluation information as the evaluation of the another user having the identification information corresponding to the selected seat position.

4. The ridesharing support system according to any one of claims 1 to 3, further comprising:
a seat position specifier that specifies a seat position of the user according to a get-in order or a get-off order of the user, wherein
the evaluation accepter accepts the evaluation about the another user who has shared a ride from the user by displaying the specified seat position on a display screen of the user terminal or the vehicle terminal.

5. The ridesharing support system according to any one of claims 1 to 4, further comprising:
a privilege provider that provides a predetermined privilege to the user on the basis of the evaluation information of the user.

6. The ridesharing support system according to any one of claims 1 to 5, wherein
the vehicle extractor extracts the dispatchable vehicle to the user on the basis of a current position of the vehicle, and comparison between a departure place of the user and a departure place of the another user who is a ridesharing candidate, comparison between a destination place of the user and a destination place of the another user, or comparison between a route from the departure place to the destination place of the user and a route from the departure place to the destination place of the another user.

7. The ridesharing support system according to claim 6, wherein the vehicle extractor is performed on the basis of comparison between the evaluation information about the user and the evaluation information about the another user who is a ridesharing candidate.

8. A ridesharing support method for providing a rideshareable vehicle to a user in a ridesharing support system including a user terminal owned by a user, and a vehicle terminal installed on a vehicle side and capable of communication connection with the user terminal, the ridesharing support method comprising:
in the user terminal,
a step of inputting a desired condition including a departure place and/or a destination place desired by the user;
a step of transmitting the input desired condition; and
a step of receiving vehicle information regarding a dispatchable vehicle,
in the vehicle terminal,
a step of receiving the desired condition including a departure place and/or a destination place desired by the user, and
a step of extracting the dispatchable vehicle to the user on the basis of a current position of the vehicle and the desired condition;
a step of transmitting the vehicle information regarding the extracted dispatchable vehicle;
a step of accepting evaluation about another user who has shared the same vehicle from the user; and
a step of storing evaluation information regarding the accepted evaluation of the another user.

9. A ridesharing support device capable of communication connection with a user terminal owned by a user and a vehicle terminal installed on a vehicle side, and for providing a rideshareable vehicle to the user, the ridesharing support device comprising:
a desired condition receiver that receives a desired condition including a departure place and/or a destination place desired by the user from the user terminal;
a vehicle extractor that extracts a dispatchable vehicle to the user on the basis of a current position of the vehicle and the desired condition;
a vehicle information transmitter that transmits vehicle information regarding the extracted dispatchable vehicle to the user terminal;
an evaluation accepter that accepts evaluation about another user who has shared the same vehicle from the user; and
an evaluation information storage that stores evaluation information regarding the accepted evaluation of the another user.
